(19) Europäisches Patentamt
European Patent Office
Office européen des brevets

(11) **EP 1 043 292 A1**

(12) **EUROPEAN PATENT APPLICATION**

(43) Date of publication:
11.10.2000 Bulletin 2000/41

(51) Int. Cl.7: **C04B 35/584**, C04B 35/593,
B23B 27/14

(21) Application number: 00302841.2

(22) Date of filing: 04.04.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 05.04.1999 JP 9808699

(71) Applicant:
**NGK SPARK PLUG CO., LTD
Mizuho-ku Nagoya-shi Aichi (JP)**

(72) Inventor:
**Matsubara, Masaru,
NGK Spark Plug Co., Ltd.
Nagoya, Aichi (JP)**

(74) Representative:
**Nicholls, Michael John et al
J.A. KEMP & CO.
14, South Square
Gray's Inn
London WC1R 5LX (GB)**

(54) **Cutting tool and method of manufacturing the same**

(57)    A cutting tool having excellent wear resistance, etc. and a method for manufacturing the same are disclosed.

A cutting tool contains silicon nitride as matrix, 10%-20% by weight titanium nitride, 3%-5% by weight alumina, and 5%-15% by weight yttria. A microstructure of the cutting tool comprises a matrix phase of silicon nitride, a hard phase of titanium nitride, a glass phase present in a grain boundary phase, and a crystal phase present in the grain boundary phase. The ratio R of a maximum peak B of the crystal phase other than silicon nitride and titanium nitride as observed through X-ray diffraction to a maximum peak A of silicon nitride as observed through X-ray diffraction (= B/A) is not less than 0.05 and not greater than 0.6.

Fig. 3

EP 1 043 292 A1

**Description**

The present invention relates to a cutting tool which contains silicon nitride as matrix and to a method of manufacturing the cutting tool.

Conventionally, many sintered bodies which contain silicon nitride as matrix (base material) have been developed. For example, Japanese Patent Publication (*kokoku*) No. 60-48475 proposes a silicon-nitride-based sintered body which is manufactured through hot-pressing and contains one or more components selected from the group consisting of titanium nitride and tantalum nitride.

Also, Japanese Patent Application Laid-Open (*kokai*) No. 9-268071 discloses a silicon-nitride tool which mainly contains silicon nitride and titanium carbonitride. A silicon-nitride tool of this kind is used for machining (cutting) parts made of cast iron.

The above-mentioned silicon-nitride tool is used for cutting not only cast iron but also a super heat-resisting alloy. Since a super heat-resisting alloy exhibits poor thermal conductivity, heat tends to accumulate at the cutting edge of the tool.

Specifically, cutting with such a tool has involved a problem in that, as cutting-edge temperature rises, softening of a grain boundary phase (which, together with a matrix phase and a hard phase, constitutes the microstructure of the tool) advances, with a resultant impairment in wear resistance of the tool.

The present invention addresses the above-mentioned problem, and an object of the present invention is to provide a cutting tool having excellent wear resistance, etc. as well as to provide a method of manufacturing the tool.

Accordingly, the invention provides:

a cutting tool containing silicon nitride as matrix, 10%-20% by weight titanium nitride, 3%-5% by weight alumina, and 5%-15% by weight yttria. The cutting tool is characterized in that a microstructure thereof comprises a matrix phase of silicon nitride, a hard phase of titanium nitride, a glass phase present in a grain boundary phase, and a crystal phase present in the grain boundary phase, and in that the ratio R of a maximum peak B of the crystal phase other than silicon nitride and titanium nitride as observed through X-ray diffraction to a maximum peak A of silicon nitride as observed through X-ray diffraction (= B/A) is not less than 0.05 and not greater than 0.6.

① The cuffing tool of the present invention is a silicon-nitride-based sintered body which contains silicon nitride as matrix (main component or base material). In addition to silicon nitride, 10%-20% by weight titanium nitride,3%-5% by weight alumina, and 5%-15% by weight yttria are contained. Particularly, silicon nitride serving as matrix is combined with titanium nitride, which features excellent thermal conductivity and low coefficient of friction, thereby improving wear resistance.

The reason for numerical limitation of the components will next be described.

Titanium nitride: 10%-20% by weight

Titanium nitride exhibits high wear resistance against a molten metal. Accordingly, when the titanium nitride content of a cutting tool material is less than 10% by weight, wear resistance is not improved sufficiently. When the titanium nitride content is in excess of 20% by weight, sintering properties tend to be impaired. Thus, titanium nitride is contained most preferably in an amount of 10% to 20% by weight.

Alumina: 3%-5% by weight

When the alumina content of the cutting tool material is less than 3% by weight, sintering properties are impaired. When the alumina content is in excess of 5% by weight, hardness decreases, with a resultant impairment in wear resistance. Thus, alumina is contained most preferably in an amount of 3% to 5% by weight.

Yttria: 5%-15% by weight

When the yttria content of the cutting tool material is less than 5% by weight, sintering properties are impaired. When the yttria content is in excess of 15% by weight, the crystal phase increases. Thus, yttria is contained most preferably in an amount of 5%-15% by weight.

When the cutting tool is substantially formed from only silicon nitride, titanium nitride, alumina, and yttria, the silicon nitride content in % by weight is balanced with the total amount in % by weight of titanium nitride, alumina, and yttria.

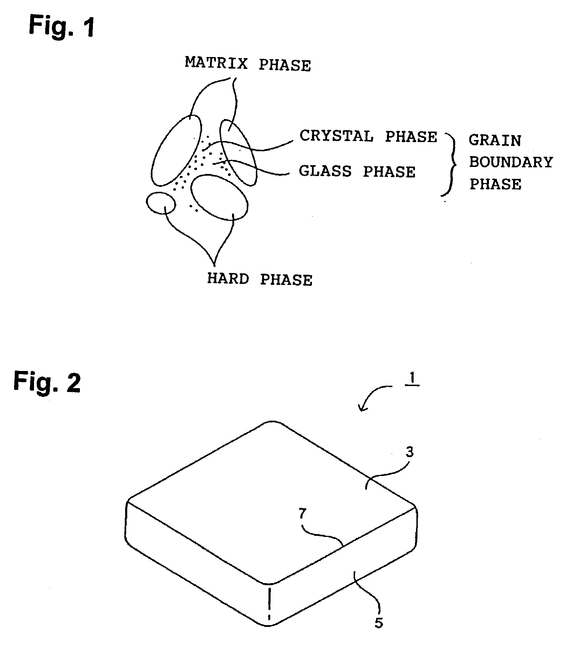

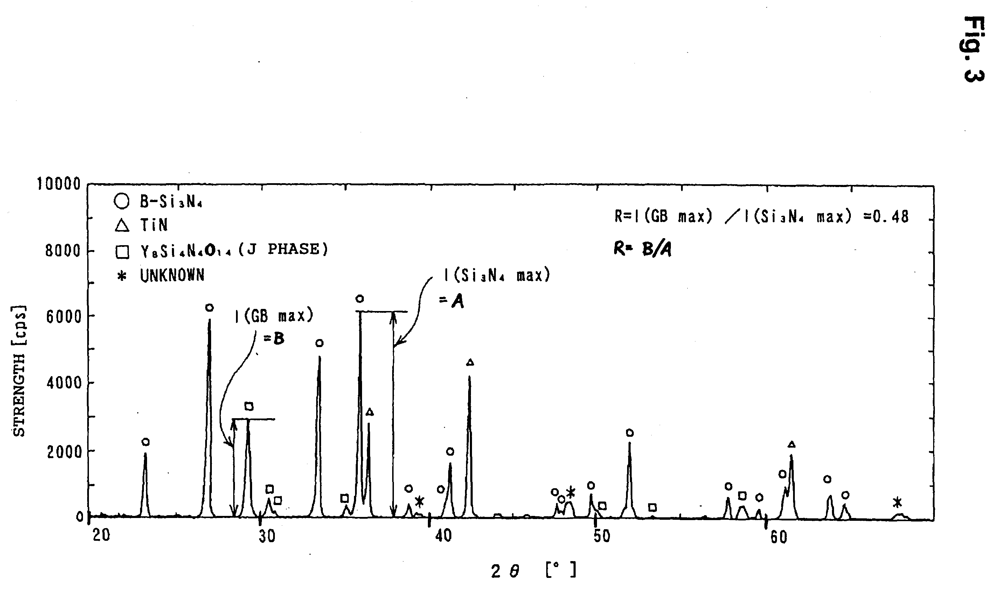

② According to the present invention, in addition to specification of the above-mentioned composition, the microstructure of the cutting tool comprises four phases; namely, a matrix phase (base material phase) of silicon nitride, a hard phase of titanium nitride, a glass phase present in a grain boundary phase, and a crystal phase present in the grain boundary phase. A state of the four phases is schematically shown in FIG. 1. The grain boundary phase is present between the matrix phase and the hard phase and comprises the glass phase and the crystal phase.

According to the present invention, a portion of the grain boundary phase is crystallized to assume the crystal phase, so that the amount of the glass phase in the grain boundary phase is decreased. Thus, even when the cutting-edge temperature rises, softening of the grain boundary phase is reduced; accordingly, wear resistance is improved.

③ According to the present invention, the ratio R of a maximum peak B of the crystal phase other than silicon nitride and titanium nitride as observed through X-ray diffraction to a maximum peak A of silicon nitride as observed through X-ray diffraction (= B/A) is not less than 0.05 and not greater than 0.6. Notably, peaks as observed through X-ray diffraction of the crystal phase indicate amounts of known crystals, such as $Y_8Si_4N_4O_{14}$, $Y_{10}Al_2Si_3O_{18}N_4$, and $Y_{10}Si_7N_4O_{23}$, and unknown crystals contained in the crystal phase.

When the peak-to-peak ratio R is less than 0.05, the amount of the crystal phase becomes too small, causing impaired suppression of softening of the grain boundary phase and thus impairing wear resistance. When the peak-to-peak ratio R is in excess of 0.6, the amount of the crystal phase becomes too large, thus impairing toughness. Thus, the peak-to-peak ratio R is most preferably not less than 0.05 and not greater than 0.6.

As mentioned above, the present invention specifies composition with respect to four components, microstructure with respect to four phases, and the peak-to-peak ratio R to thereby provide a cutting tool having excellent wear resistance and toughness.

Preferably the crystal phase contains a J phase.

This preferred feature exemplifies the construction of the crystal phase. Specifically, the J phase; i.e., $Y_8Si_4N_4O_{14}$, is contained as a crystal phase. Thus, the glass phase in the grain boundary phase is decreased, so that crystals having high melting point are provided, thereby suppressing softening of the grain boundary phase at high temperature.

Preferably the cutting tool is used for cutting a super heat-resisting alloy.

This feature exemplifies an application of the cutting tool.

Since a super heat-resisting alloy exhibits poor thermal conductivity, heat tends to accumulate at the cutting edge of a tool. However, since the cutting tool of the present invention assumes the above-mentioned microstructure, even when the cutting-edge temperature rises during cutting of a super heat-resisting alloy, softening of the grain boundary phase is suppressed, thereby exhibiting excellent wear resistance.

Notably, a super heat-resisting alloy denotes an alloy capable of withstanding use at high temperature not lower than 650°C; specifically, an alloy which contains Fe in an amount of not greater than 50% by weight or an alloy for high-temperature use which contains Ni or Co as a main component. Examples of such a super heat-resisting alloy include an Ni-based alloy, such as Inconel or Waspalloy.

The cutting tool of the present invention is a particularly preferred tool for cutting the above-mentioned Ni-based alloy (Inconel or Waspalloy). Preferred cutting conditions are as follows:

Cutting speed: V = 100-500 m/min
    (more preferably 200-400 m/min)
Feed: f = 0.05-0.4 mm/rev
    (more preferably 0.1-0.3 mm/rev)
Depth of cut: d = not less than 0.05 mm
    (more preferably not less than 0.1 mm)

Preferably a cutting edge is located between a rake face and a flank of the cutting tool.

This feature exemplifies the shape of the cutting tool. An example shape of the cutting tool having the cutting edge located between the rake face and the flank is a rectangular parallelepiped. Other examples include a quadrangular prism in which the rake face assumes a rhombus shape, a triangular prism in which the rake face assumes a triangular shape, or a circular cylinder in which the rake face assumes a circular shape.

According to another aspect of the invention there is provided a method for manufacturing a cutting tool, as described above, characterized in that sintering is performed under atmospheric pressure in a nitrogen atmosphere.

This aspect of the present invention exemplifies a method for manufacturing the cutting tool. A material prepared such that the cutting tool assumes the above-mentioned composition and microstructure undergoes forming and then sintering under atmospheric pressure in a nitrogen atmosphere, to thereby yield a silicon-nitride-based sintered body. Subsequently, the sintered body undergoes post-machining, such as polishing, to become a cutting tool.

As compared to, for example, HIP, sintering under atmospheric pressure is easier to perform and less expensive. Thus, the cutting tool can be manufactured at lower cost.

When a silicon-nitride-based sintered body suited for formation of the cutting tool is to be manufactured merely through sintering under atmospheric pressure, the composition of material for the sintered body (accordingly, the composition of the cutting tool) must be selected appropriately. Specifically, the material is desirably selected such that the cutting tool contains, for example, TiN in an amount of not greater than 10% by weight, a sintering aid in an amount of not less than 6% by weight, and $Si_3N_4$ as balance.

Preferably, after the sintering under atmospheric pressure is performed, sintering is performed under gas pressure in a nitrogen atmosphere.

Unless a special composition is employed, mere sintering under atmospheric pressure (primary sintering) encounters difficulty in providing a sintered body which is sufficiently dense for application to a cutting tool (for example, not greater than 95% of the theoretical density ratio). According to the present invention, sintering is performed under gas pressure in a nitrogen atmosphere as secondary sintering, thereby providing a sufficiently dense sintered body (for example, equal to or greater than 98% of the theoretical density ratio).

Through combination of sintering under atmospheric pressure and sintering under gas pressure, a sufficiently dense sintered body can be manufactured at low cost.

Sintering under gas pressure is performed under the following conditions: nitrogen atmosphere; desirable pressure of nitrogen atmosphere 5-100 atmospheres; desirable sintering temperature 1600-1800°C.

Preferably after the sintering under atmospheric pressure is performed, sintering is performed by means of HIP (Hot Isostatic Press).

As mentioned above, mere sintering under atmospheric pressure (primary sintering) encounters difficulty in providing a sintered body which is sufficiently dense for application to a cutting tool. According to the present invention, sintering is performed by means of HIP as secondary sintering, thereby providing a sufficiently dense sintered body (for example, a theoretical density ratio becomes not less than 95%).

Through combination of sintering under atmospheric pressure and sintering by means of HIP, a sufficiently dense sintered body can be manufactured.

Sintering by means of HIP is performed under the following conditions: nitrogen atmosphere; desirable pressure of nitrogen atmosphere 1000-2000 atmospheres; desirable sintering temperature 1500-1800°C.

Embodiments of the invention will now be described, by way of example only, with reference to the accompanying drawings, in which:

Fig. 1 is an explanatory view schematically showing a state of phases constituting a microstructure of a cutting tool;
Fig. 2 is a perspective view showing the shape of a cutting tool according to an embodiment of the present invention;
Fig. 3 is a graph showing peaks as observed through X-ray diffraction; and
Fig. 4 is a view showing a method for evaluating cutting performance.

A cutting tool which is formed from a silicon-nitride-based sintered body and is used for cutting a super heat-resisting alloy, and a method for manufacturing the cutting tool will next be described by way of example.

a) First, the cutting tool of the present embodiment will be described.

As shown in FIG. 2, a cutting tool 1 of the present embodiment is a negative tip which assumes an SNGN120408 shape according to ISO Standard.

Specifically, as shown in FIG. 2, the cutting tool 1 includes upper and lower rake faces 3, four flanks 5 at sides, and cutting edges 7, each of which is a side edge located between the rake face 3 and the flank 5. The cutting tool 1 is a rectangular-parallelepiped tip having a thickness of 4.76 mm and the cutting edges 7 of a 12.7 mm length. The cutting edges 7 are chamfered.

The cutting tool 1 of the present embodiment is formed from a silicon-nitride-based sintered body, which contains silicon nitride as matrix (base material). Specifically, the cutting tool 1 contains 10%-20% by weight titanium nitride, 3%-5% by weight alumina, 5%-15% by weight yttria, and silicon nitride as balance.

Further, the microstructure of the cutting tool 1 includes a matrix phase of silicon nitride, a hard phase of titanium nitride, a glass phase present in a grain boundary phase, and a crystal phase present in the grain boundary phase. Also, the ratio R of a maximum peak B of the crystal phase other than silicon nitride and titanium nitride as observed through X-ray diffraction to a maximum peak A of silicon nitride as observed through X-ray diffraction (= B/A) is not less than 0.05 and not greater than 0.6.

b) Next, a method for manufacturing the cutting tool 1 of the present embodiment will be described.

Measure out silicon nitride ($Si_3N_4$) powder, which is a main component, having an average grain size of 0.5 μm (α percentage = not less than 99%), yttria ($Y_2O_3$) powder having an average grain size of 0.8 μm, and alumina ($Al_2O_3$) powder having an average grain size of 0.4 μm, according to the composition (in the "examples of the present invention" column) shown in Table 1 so as to establish the composition of the cutting tool 1.

The thus-measured materials, together with alumina balls, are placed in a pot lined with alumina and are subjected to wet mixing and pulverization in an ethanol solvent for 16 hours, thereby yielding slurry.

This slurry is dried in hot water. To the resulting substance, a microcrystalline-wax-based organic binder (3.5% by weight) dissolved in ethanol is added. The resultant mixture is mixed in a ball mill.

The thus-obtained basis material is press-formed to an SNGN120408 shape according to ISO Standard, followed by dewaxing through application of heat of 800°C for 60 minutes in a nitrogen atmosphere maintained at 1 atmosphere.

Next, primary sintering is performed through application of heat of 1700°C for 4 hours in a nitrogen atmosphere maintained at atmospheric pressure (1 atmosphere).

Next, sintering under gas pressure is performed as secondary sintering through application of heat of 1750°C for 4 hours in a nitrogen atmosphere maintained at 75 atmospheres.

Instead of sintering under gas pressure, sintering by means of HIP may be performed as secondary sintering. Secondary sintering by means of HIP is performed through application of heat of 1700°C for 4 hours in a nitrogen atmosphere maintained at 1000 atmospheres.

The thus-obtained silicon-nitride-based sintered body is heat-treated in a nitrogen atmosphere under the conditions (in the "examples of the present invention" column) shown below in Table 1 so as to accelerate crystallization of the grain boundary phase.

The thus-heat-treated silicon-nitride-based sintered body undergoes grinding so as to be formed into an SNGN120408 shape according to ISO Standard, whereby the cutting tool 1 is completed.

c) Next will be described experiments which were conducted in order to confirm the effects of cutting tools conforming to the ranges as specified in the present invention.

Cutting tools were manufactured under the conditions shown below in Table 1 as samples for use in the experiments. Sample Nos. 1 to 4 represent examples of the present invention, and sample Nos. 5 to 10 represent comparative examples. The manufactured cutting-tool samples assumed an SNGN120408 shape according to ISO Standard.

The cutting-tool sample Nos. 1 to 10 were evaluated for physical properties as described below in (i) and for cutting performance as described below in (ii).

(i) Evaluation of physical properties

Sintered bodies were examined for density, micropore, hardness, toughens, peak-to-peak ratio R (amount of crystal phase), and crystals in crystal phase. The results are shown below in Table 1.

① Density

The density of each sintered body was measured by the Archimedian method. On the basis of the measured density, the theoretical density ratio of the sintered body was obtained.
The cross section of each sintered body was mirror-polished. The polished surface was observed through a microscope of 200 magnifications to thereby measure micropore according to CIS-006B Standard.

② Hardness and toughness

A ground surface of each sintered body was mirror-polished. A Vickers' indenter was pressed against the polished surface under a load of 30 kg. The diagonal length of the resulting indentation and the length of crack were measured to thereby obtain Vickers hardness (according to JIS R1610) and fracture toughness (according to JIS R1607 (IF method)).

③ Peak-to-peak ratio R (amount of crystal phase)

A polished surface of each sintered body was subjected to X-ray diffraction to thereby obtain the peak-to-peak ratio R of the sintered body. For example, when the X-ray diffraction result as shown in FIG. 3 is obtained, the maximum peak height A of silicon nitride (= I ($Si_3N_4$max)) and the maximum peak height B of the crystal phase other than silicon nitride and titanium nitride (= I (GBmax)) are measured. The peak-to-peak ratio R (= B/A = I (GBmax)/I ($Si_3N_4$max) is obtained.

FIG. 3 is a graph showing the X-ray diffraction result. In the graph of FIG. 3, strength [cps] is read along the axis of ordinate, and 2θ [°] is read along the axis of abscissa. In FIG. 3, the peak-to-peak ratio R is 0.48.

④ Identification of crystal phases

Peaks obtained through the above-mentioned X-ray diffraction were compared with those of known materials to thereby identify crystal phases.

(ii) Evaluation of cutting performance

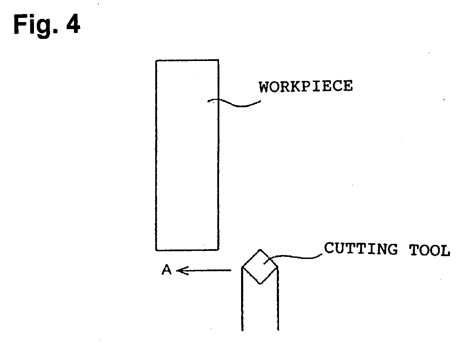

As shown in FIG. 4, each of the cutting tools was fed in the direction of arrow A so as to cut the outer circumferential surface of a rotating cylindrical workpiece under the conditions listed below. During turning, the cutting edge of the cutting tool was examined for state of wear (amount of wear of flank after 1-pass cutting) and chipping. The result is shown below in Table 1.

Cutting conditions

Material of workpiece: Inconel 718
Shape of workpiece: 300 mm (outside diameter) x 100
     mm (length)
Cutting speed: V = 300 m/min
Feed: f = 0.15 mm/rev
Depth of cut: d = 1.0 mm
Dry or wet: wet

Table 1

| Sample No. | | Examples of the invention | | | | Comparative examples | | | | | |
|---|---|---|---|---|---|---|---|---|---|---|---|
| | | 1 | 2 | 3 | 4 | 5 | 6 | 7 | 8 | 9 | 10 |
| Composition [% by weight] | $Si_3N_4$ | 83 | 75 | 70.5 | 60 | 88 | 55 | 75 | 75 | 85 | 68 |
| | $Al_2O_3$ | 3 | 5 | 3.5 | 5 | 3 | 5 | 5 | 5 | 2 | 6 |
| | $Y_2O_3$ | 4 | 5 | 11 | 15 | 4 | 15 | 5 | 5 | 3 | 16 |
| | TiN | 10 | 15 | 15 | 20 | 5 | 25 | 15 | 15 | 10 | 10 |
| Sintering method | | ① | ①+② | ①+② | ①+③ | ① | ①+③ | ① | ① | ① | ① |
| Component phases of sintered body | $Si_3N_4$ | ○ | ○ | ○ | ○ | ○ | ○ | ○ | ○ | ○ | ○ |
| | TiN | ○ | ○ | ○ | ○ | ○ | ○ | ○ | ○ | ○ | ○ |
| | Crystal phase | J, A Uk | J Uk | J Uk | J, H Uk | J Uk | J Uk | J Uk | J Uk | J, A Uk | J Uk |
| | Peak-to-peak ratio R | 0.07 | 0.3 | 0.45 | 0.52 | 0.3 | 0.3 | 0.02 | 0.7 | 0.06 | 0.55 |
| Physical properties | Theoretical density ratio [%] | 99.7 | 99.6 | 99.8 | 99 | 99.6 | 99.8 | 99.6 | 99.8 | 94 | 99.8 |
| | Micropore | A2 | A2 | A2 | A2 | A2 | A2 | A2 | A2 | A8 | A2 |
| | Hardness Hv | 15.5 | 15.5 | 15 | 14.8 | 16 | 14 | 15 | 16.5 | 14.0 | 14 |
| | Toughness Kc | 6.8 | 6.2 | 6.7 | 6 | 7.3 | 5.2 | 6.2 | 5 | 5.0 | 6.5 |
| Cutting performance | Amount of wear [mm] | 0.3 | 0.2 | 0.1 | 0.1 | 1.6 | chipping | 0.8 | chipping | breaking | 0.9 |

In the row "Composition phases of sintered body" of Table 1, the symbol "○" appearing in the row "$Si_3N_4$" indicates the presence of the matrix phase, and the symbol "○" appearing in the row "TiN" indicates the presence of the hard phase.

In the row "Crystal phase," the symbol "J" standing for J phase indicates $Y_8Si_4N_4O_{14}$; the symbol "A" standing for A phase indicates $Y_{10}Al_2Si_3O_{18}N_4$; the symbol "H" standing for H phase indicates $Y_{10}Si_7N_4O_{23}$; and the symbol "Uk" stands for unknown phase.

In the row "Sintering method," the symbol "①" indicates sintering under atmospheric pressure; the symbol "②" indicates sintering under gas pressure; the symbol "③" indicates HIP; and the symbol "+" indicates that both primary sintering and secondary sintering are performed. Notably, in sintering sample No. 7, quick cooling was performed; and in sintering sample No. 8, the sample was heat-treated through application of heat of 1400°C for 12 hours in a nitrogen atmosphere of 1 atmosphere.

In the "Micropore" row, the symbol "A2" indicates that the amount of micropores is 0.02% by volume; and the symbol "A8" indicates that the amount of micropores is 0.6% by volume.

As seen from Table 1, sample Nos. 1 to 4—which are examples of the present invention, which contain titanium nitride in an amount as specified in the invention, and which exhibit a peak-to-peak ratio R as specified in the invention—exhibit excellent wear resistance. Sample Nos. 1 to 4 also exhibit appropriate hardness and toughness, and were free from chipping during experiment.

By contrast, when the titanium nitride content is too low (sample No. 5 serving as a comparative example), the amount of wear increases. When the titanium nitride content is too high (sample No. 6 serving as a comparative example), the cutting tool becomes too hard and thus becomes brittle; as a result, the cutting edge chips.

When the degree of crystallization of the grain boundary phase is too small (sample No. 7 serving as a comparative example), the amount of wear increases. By contrast, when the degree of crystallization is excessive (sample No. 8 serving as a comparative example), toughness deteriorates, causing chipping.

When the sintering aid content is too low (sample No. 9 serving as a comparative example), it is only 94% densified. When the sintering aid content is too high (sample No. 10 serving as a comparative example), wear resistance becomes poor.

The present invention is not limited to the above-described embodiments. It should be apparent to those skilled in the art that the present invention may be embodied in many other specific forms without departing from the scope of the invention.

As described above, the cutting tool of the present invention contains the four components of appropriate proportions and assumes a microstructure which exhibits an appropriate combination of the four phases as well as an appropriate peak-to-peak ratio R. In other words, through appropriate combination of silicon nitride and titanium nitride and through crystallization of the grain boundary phase to an appropriate degree, excellent wear resistance and toughness are imparted to the cutting tool.

The method for manufacturing a cutting tool according to the present invention enables a cutting tool to be eadily manufactured having the above-mentioned excellent performance at low cost.

## Claims

1. A cutting tool containing silicon nitride as a matrix, 10%-20% by weight titanium nitride, 3%-5% by weight alumina, and 5%-15% by weight yttria,

   wherein said cutting tool comprises a matrix phase of silicon nitride, a hard phase of titanium nitride, a glass phase present in a grain boundary phase, and a crystal phase present in the grain boundary phase; and

   wherein a ratio (R) of a maximum peak (B) of the crystal phase, other than silicon nitride and titanium nitride, as observed through X-ray diffraction, to a maximum peak (A) of silicon nitride as observed through X-ray diffraction ( R= B/A ) is not less than 0.05 and not greater than 0.6.

2. A cutting tool according to claim 1, wherein the crystal phase contains a J phase.

3. A cutting tool according to claim 1 or 2, wherein said cutting tool is for use in cutting a super heat-resistant alloy.

4. A cutting tool according to claim 1, 2 or 3, further comprising a rake face (3), a flank (5) and a cutting edge (7), and wherein said cutting edge (7) is located between said rake face (3) and said flank (7).

5. A method for manufacturing a cutting tool, which cutting tool is defined in any one of claims 1 to 4, wherein said method comprises a step of sintering performed under atmospheric pressure in a nitrogen atmosphere.

6. A method for manufacturing a cutting tool according to claim 5, wherein, after said step of sintering under atmospheric pressure is performed, a further sintering step is performed under a pressurised nitrogen gas atmosphere.

**7.** A method for manufacturing a cutting tool according to claim 5, wherein, after said step of sintering under atmospheric pressure is performed, a further sintering step is performed by means of hot-isostatic-pressing HIP.

## Fig. 1

MATRIX PHASE

CRYSTAL PHASE ⎫ GRAIN
                BOUNDARY
GLASS PHASE  ⎭ PHASE

HARD PHASE

## Fig. 2

## Fig. 3

# Fig. 4

WORKPIECE

CUTTING TOOL

A

## EUROPEAN SEARCH REPORT

**Application Number**

EP 00 30 2841

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHEMICAL ABSTRACTS, vol. 127, no. 24, 15 December 1997 (1997-12-15) Columbus, Ohio, US; abstract no. 335527, UKEGAWA,H., ET AL.: XP002142144 * abstract * & SEI TEKUNIKARU REBYU, vol. 151, 1997, pages 133-138, | 1-7 | C04B35/584 C04B35/593 B23B27/14 |
| A | DATABASE WPI Week 198420 Derwent Publications Ltd., London, GB; AN 1984-122836 XP002142145 & JP 59 057963 A (NGK SPARK PLUG CO., LTD.), 3 April 1984 (1984-04-03) * abstract; examples 4,10; table 1 * | 1-7 | |
| A | EP 0 113 660 A (NGK SPARK PLUG CO., LTD. ) 18 July 1984 (1984-07-18) * claim 1; tables 3,4 * | 1-7 | **TECHNICAL FIELDS SEARCHED (Int.Cl.7)** C04B B23B |

The present search report has been drawn up for all claims

| Place of search | Date of completion of the search | Examiner |
|---|---|---|
| THE HAGUE | 7 July 2000 | Hauck, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 30 2841

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2000

| Patent document cited in search report | | Publication date | Patent family member(s) | | Publication date |
|---|---|---|---|---|---|
| JP 59057963 | A | 03-04-1984 | NONE | | |
| EP 113660 | A | 18-07-1984 | JP | 1585431 C | 31-10-1990 |
| | | | JP | 2011549 B | 14-03-1990 |
| | | | JP | 59128270 A | 24-07-1984 |
| | | | JP | 1029652 B | 13-06-1989 |
| | | | JP | 59224201 A | 17-12-1984 |
| | | | JP | 1798750 C | 12-11-1993 |
| | | | JP | 5007122 B | 28-01-1993 |
| | | | JP | 59224202 A | 17-12-1984 |
| | | | DE | 3484318 D | 02-05-1991 |
| | | | US | 4578087 A | 25-03-1986 |

EPO FORM P0459

For more details about this annex : see Official Journal of the European Patent Office, No. 12/82